# EUROPEAN PATENT SPECIFICATION

(11) **EP 3 319 782 B1**
(45) Date of publication and mention of the grant of the patent: **02.12.2020**
(21) Application number: 16736069.2
(22) Date of filing: 05.07.2016
(51) Int. Cl.: B29C 65/08, B29C 65/64, B29C 65/56, B29K 101/12, B29K 705/00

(54) **BONDING OBJECTS TOGETHER**
VERBINDEN VON KOMPONENTEN
LIAISON D'OBJETS

(30) Priority: 06.07.2015 CH 9822015
(43) Date of publication of application: 16.05.2018
(73) Proprietor: Woodwelding AG, 6362 Stansstad (CH)
(72) Inventor: MAYER, Jörg, 5702 Niederlenz (CH); LEHMANN, Mario, 2353 Les Pommerats (CH); KVIST, Joakim, 2560 Nidau (CH); POSCHNER, Patricia, 3043 Uettligen (CH)
(74) Representative: Frei Patent Attorneys
(86) International application number: PCT/EP2016/065779
(87) International publication number: WO 2017/005720

(56) References cited:
- EP-A1- 0 284 899
- WO-A1-2008/110835
- WO-A1-2009/052644
- WO-A1-2011/042326
- DE-A1- 3 724 253
- DE-A1- 3 835 640
- DE-A1-102008 017 822
- DE-A1-102011 086 791
- FR-A1- 2 291 843
- FR-A5- 2 167 484
- US-A- 4 358 328
- US-B1- 6 514 593

## Description

The invention is in the fields of mechanical engineering and construction, especially mechanical construction, for example automotive engineering and aviation engineering.

In the automotive, aviation and other industries, due to new manufacturing techniques and new materials as well as the constant need for increased efficiency, methods of bonding objects together remain a challenge.

DE 10 2011 068 791 discloses a method of occluding a bore in a workpiece, wherein a cover is introduced in the bore and is fastened therein by ultrasonic welding or rotation friction welding. FR 2 291 843 discloses a method of fixing a decorating element to a plastic part of an automobile, wherein the decorating element has protruding lugs that are pressed into the plastic part using ultrasound. WO 2011/042326, WO 2009/052644, FR 2 167 484, EP 0 284 899, DE 10 2008 017 822, DE 38 354 640, DE 37 24 253, US 6,514,593 and WO 2008/110835 all show different fastening techniques. US 4,358,328 discloses a method of bonding a first object to a second object, comprising:
- providing the second object having a flat part, and an opening defining a contour, the second object having a fastening portion defining a coupling structure having a positive fit shape and running around a periphery of the opening,
- providing the first object,
- positioning the first object relative to the second object in the opening, and providing a thermoplastic material along the contour,
- causing a relative force between the second and first objects and impinging the assembly of the first and second object with mechanical vibration until at least a flow portion of the thermoplastic material becomes flowable and flows into the coupling structure, and
- causing the thermoplastic material to re-solidify, wherein
- the flat part is a metal sheet portion,
- and in that the flat part along the contour is folded towards a proximal side and/or away from the opening to form at least a part of the coupling structure.

It is an object of the present invention to provide approaches for bonding objects together, especially for bonding a first object to a second object.

A requirement for the connection, hence, may be that it provides a full-scale seal around the contour. An other requirement may be that the connection has a certain minimal strength. A further, optional, requirement may be that it is possible to make the connection with access only from the outside. An even further requirement may be that no brittle material is involved. Yet an other requirement may be that the method can be integrated in a fully automated process, for example after the 'paint shop' (possible corrosion issues). It is therefore a further object of a first aspect of the invention that at least one of these requirements is at least partially met.

It is a further object to bond a first object to a second object, which method is especially suited for fixing the second object to the second object in a precisely defined relative position even in situations where for practical reasons it is not easily possible to precisely define joining locations on the second object.

In accordance with the **first aspect,** a method of bonding a first object and a second object together according to claim 1 is provided.

After the thermoplastic material has re-solidfied, this will yield a positive-fit connection between the first and second objects by the liquefied and re-solidified flow portion interpenetrating the coupling structure.

The fact that the second object has a flat portion means that the corresponding portion is flat in relation to its length and possibly also in relation to its width. It does not exclude that the corresponding portion is curved. Rather, the method according to the first aspect is especially suited for securing a first object to a second object having a complex three-dimensional shape. The contour thus may be a 3D-contour, i.e. it does not need to be in a plane. Nevertheless, the contour may define a proximodistal axis, being perpendicular to an average plane of the contour. The positive-fit shape may especially define an undercut with respect to the proximodistal axis.

The step of causing the thermoplastic material to re-solidify may comprise maintaining the relative force for some more time, for example until the flow portion is not flowable any more, with equal or smaller or higher magnitude. After resolidification, a positive-fit between the second object having the positive fit shape and the thermoplastic material results.

The thermoplastic material may especially be a thermoplastic material of the first object. Hence, in the step of providing the first object, the first object comprises the thermoplastic material. Alternatively, it would be possible to provide the first object as a separate item, for example a thermoplastic strip following the contour. Then, in the process also a bonding of the thermoplastic material with the first object is caused, for example an adhesive bonding or a positive-fit connection, or a weld with the first object.

The first object may have a shape adapted to the shape of the opening in the second object and in the step of positioning may be positioned relative to the second object with a periphery of the first object following the contour.

The first object may especially close off the opening.

The second object may especially be a sheet metal part of a complex object, for example of a body of vehicle or of a building or complex installation, the metal sheet part having an opening, and the first object is an object to be fixed in the opening along a contour of this opening.

The first object may for example be a plastic carrier structure for a functional element (that may be exchangeable), for example a lighting element, a sensor, a display element, an control and/or input element, a transducer, for example loudspeaker, or any combination of these. Alternatively, the first object may instead of a carrier structure for such element be such an element, wherein such element then has a thermoplastic portion.

Requirements for the bond to the second object may include any of resistance to vibration load, resistance to acceleration forces, the property of being leakproof, or having a defined position and, if applicable, gap dimension for technical and/or optical reasons.

In embodiments, the step of causing a relative force between the second and first objects and impinging the assembly of the first and second object with mechanical vibration is carried out simultaneously for the full contour or with a shifting movement along the contour or sequentially for different locations along the contour until a seal around the entire contour is achieved, i.e. the coupling structure is uninterruptedly penetrated by the thermoplastic material along the entire contour.

The contour may be a closed contour, or it may be interrupted, for example if the first object is already secured to the second object in a flap-like manner.

The step of causing a relative force between the first and second object and the step of causing vibration to impinge may be carried out simultaneously (this does not exclude the possibility that the relative force may be maintained after the vibration stops). The step may comprise pressing, by a sonotrode, the first object against the second objet.

Such a sonotrode may comprise a distally facing coupling face that during the process is in contact with a proximally facing coupling face of the first object.

For the process, the sonotrode may be caused to be guided along the contour. For example, the sonotrode may be a rolling sonotrode, or it may be a gliding sonotrode gliding along the contour.

Alternatively, the sonotrode may, similarly to a punching device, have a shape corresponding to the contour, so that the method may be carried out for all positions along the contour simultaneously.

The flat portion of the second object may be a sheet portion, especially a metal sheet. The metal sheet portion may be of a metal sheet in the narrow sense of the word (manufactured by rolling) but may also be constituted by a metallic part manufactured in a cast process, such as a die cast object, or in an other process.

The coupling structure of the second object may be different from a mere straight edge extending in a sheet plane and may for example comprise a folded portion of the second object. For example, the flat part near the contour may be folded towards the proximal side (from which the first object is brought into contact with the second object) and/or outwardly, i.e. away from the opening to form the coupling structure.

In addition or as an alternative, the second object may be shaped to form a pot-like feature, with the sheet metal being bent inwardly (towards the distal side) forming an interior wall portion, with the sheet metal continuing into a fastening portion following an inner end of the wall portion, the fastening portion forming the coupling structure.

In an example, the second object may be a part of an automobile body, and the first object may be a specific automobile part to be bonded to the automobile body.

In accordance with a further concept a method of fixing a first object to a second object is provided, which method is especially suited for fixing the first object to the second object in a precisely defined relative position even in situations where for practical reasons it is not easily possible to precisely define joining locations on the second object.

The method of attaching a first object to second object, for example a sheet-like second object, comprises the steps of:
- providing the second object with a plurality anchors fastened thereto,
   o wherein each anchor comprises an end piece with a surface portion that has a coupling structure with an undercut,
- providing the first object comprising thermoplastic liquefiable material in a solid state,
- pressing the first object against the second object with mechanical vibration acting on the first object and/or the second object until a flow portion of the thermoplastic material of the first object is liquefied and flows into the coupling structures of the end pieces,
- and letting the thermoplastic material of the first object re-solidify to yield a positive-fit connection between the first and second objects by the liquefied and re-solidified flow portion interpenetrating the coupling structures.

The step of causing the thermoplastic material to re-solidify may comprise maintaining the pressing force for some more time, for example until the flow portion is not flowable any more, with equal or smaller or higher magnitude.

In this, the anchors may have a distance between each other sufficient for a portion of the first object between two neighbouring anchors to not become flowable during the step of pressing and causing the vibration to act.

Also, at least the end pieces of the anchors are reversibly removable from the second object The anchors each comprise two anchor parts, an anchoring part anchored relative to the second object, and an end piece part comprising the end piece.

For example, the connection between the end pieces parts and the second object (especially between the end piece parts and the anchoring parts) may be a reversible click-on connection (click-on connection). Then, the end piece parts may be click-on parts.

Click-on connections require a relatively precise relative positioning of the two portions clicked on each other for the connection to work smoothly. If a base part of the click-on connection is to be fastened to a second object, a based part to a first object, and if the first object in the clicked-on state needs to be in a precisely defined position relative to the second object, then prior art approaches require both:
- a high precision positioning of the base part on the second object; and
- a high precision positioning of the based parts on the first object, taking into account both, the pattern of positions of the base parts and the position of the base parts on the second object.

The approach according to this concept brings about the substantial advantage that neither of these requirements has to be met. The operator just has to position the first object relative to the second object (which may for example be done visually) and to carry out the process. The exact locations of the pattern of anchors on the second object are not critical parameters, and due to the approach of this concept, the fastening location of the anchors in the first object need not be pre-defined but are defined in the process only. As a result, a major advantage in terms of process efficiency results without the required precision being jeopardized.

The process of causing a connection between the end pieces and the first object may be carried out sequentially for the different end pieces, one after the other, or simultaneously for at least some of the anchors, for example by using a sonotrode with a large coupling surface acting on the first object or possibly on the second object.

The second object in this may be of a metal sheet, constituted by a metal sheet in the narrow sense of the word (manufactured by rolling, or a metal sheet manufactured in a cast or other process. Especially, the second object may belong to a complex object, such as a body of a vehicle, a building, a complex installation, etc.

The anchors (in case of anchors comprising a plurality of parts the anchoring parts thereof) may be fastened to the second object any suitable means, including conventional means. In embodiments, the anchors(anchoring parts are fastened to fastening openings thereof by the approach taught in WO 2015/117253, incorporated herein by reference, for example referring to Fig. 24 (but for example with a separate counter element instead of a sheet of the second object serving as the counter element) or by the method as taught in Swiss patent application 00 778/16.

The first object may be an object to be affixed to the second object. In an example, the second object is carrier structure for an other element.
- Often, when a first object is connected to a second object, the following requirements are to be met:the first object has to be removable
- the connection points, where connectors are attached to the second object, have to be sealed
- the relative positioning of according receiver holes of the second object and the fixation locations on of the first object to be accurate
- the fixation should be cost-efficient.

In accordance with the prior art, often plurality of clips are used to reversibly fix a first object to a second object. The further concept aims at replacing this manual process and in addition at providing an alternative that brings about a watertight, pre-assemblable, robust and efficient-to manufacture solution.

The following may apply to all aspects:
The liquefaction of the flow portion may be primarily caused by friction between the vibrating object and the surface of the respective other object, which friction heats the object that has the thermoplastic material superficially.

In this text the expression "thermoplastic material being capable of being made flowable e.g. by mechanical vibration" or in short "liquefiable thermoplastic material" or "liquefiable material" or "thermoplastic" is used for describing a material comprising at least one thermoplastic component, which material becomes liquid (flowable) when heated, in particular when heated through friction i.e. when arranged at one of a pair of surfaces (contact faces) being in contact with each other and vibrationally moved relative to each other, wherein the frequency of the vibration has the properties discussed hereinbefore. In some situations, for example if the first object itself has to carry substantial loads, it may be advantageous if the material has an elasticity coefficient of more than 0.5 GPa. In other embodiments, the elasticity coefficient may be below this value, as the vibration conducting properties of the first object thermoplastic material do not play a role in the process.

Thermoplastic materials are well-known in the automotive and aviation industry. For the purpose of the method according to the present invention, especially thermoplastic materials known for applications in these industries may be used.

A thermoplastic material suitable for the method according to the invention is solid at room temperature (or at a temperature at which the method is carried out). It preferably comprises a polymeric phase (especially C, P, S or Si chain based) that transforms from solid into liquid or flowable above a critical temperature range, for example by melting, and re-transforms into a solid material when again cooled below the critical temperature range, for example by crystallization, whereby the viscosity of the solid phase is several orders of magnitude (at least three orders of magnitude) higher than of the liquid phase. The thermoplastic material will generally comprise a polymeric component that is not cross-linked covalently or cross-linked in a manner that the cross-linking bonds open reversibly upon heating to or above a melting temperature range. The polymer material may further comprise a filler, e.g. fibres or particles of material which has no thermoplastic properties or has thermoplastic properties including a melting temperature range which is considerably higher than the melting temperature range of the basic polymer.

In this text, generally a "non-liquefiable" material is a material that does not liquefy at temperatures reached during the process, thus especially at temperatures at which the thermoplastic material of the first object is liquefied. This does not exclude the possibility that the non-liquefiable material would be capable of liquefying at temperatures that are not reached during the process, generally far (for example by at least 80°C) above a liquefaction temperature of the thermoplastic material or thermoplastic materials liquefied during the process. The liquefaction temperature is the melting temperature for crystalline polymers. For amorphous thermoplastics the liquefaction temperature (also called "melting temperature in this text") is a temperature above the glass transition temperature at which the becomes sufficiently flowable, sometimes referred to as the 'flow temperature' (sometimes defined as the lowest temperature at which extrusion is possible), for example the temperature at which the viscosity drops to below 10⁴ Pa^{∗}s (in embodiments, especially with polymers substantially without fiber reinforcement, to below 10³ Pa^{∗}s)), of the thermoplastic material.

For example, non-liquefiable material may be a metal, such as aluminum or steel, or a hard plastic, for example a reinforced or not reinforced thermosetting polymer or a reinforced or not reinforced thermoplastic with a melting temperature (and/or glass transition temperature) considerably higher than the melting temperature/glass transition temperature of the liquefiable part, for example with a melting temperature and/or glass transition temperature higher by at least 50°C or 80°C.

Specific embodiments of thermoplastic materials are: Polyetherketone (PEEK), polyesters, such as polybutylene terephthalate (PBT) or Polyethylenterephthalat (PET), Polyetherimide, a polyamide, for example Polyamide 12, Polyamide 11, Polyamide 6, or Polyamide 66, Polymethylmethacrylate (PMMA), Polyoxymethylene, or polycarbonateurethane, a polycarbonate or a polyester carbonate, or also an acrylonitrile butadiene styrene (ABS), an Acrylester-Styrol-Acrylnitril (ASA), Styrene-acrylonitrile, polyvinyl chloride (PVC), polyethylene, polypropylene, and polystyrene, or copolymers or mixtures of these.

In embodiments in which both, the first and the second object comprise thermoplastic material and no welding is desired, the material pairing is chosen such that the melting temperature of the second object material is substantially higher than the melting temperature of the first object material, for example higher by at least 50°. Suitable material pairings are for example polycarbonate or PBT for the first object and PEEK for the second object.

In addition to the thermoplastic polymer, the thermoplastic material may also comprise a suitable filler, for example reinforcing fibers, such as glass and/or carbon fibers. The fibers may be short fibers. Long fibers or continuous fibers may be used especially for portions of the first and/or of the second object that are not liquefied during the process.

The fiber material (if any) may be any material known for fiber reinforcement, especially carbon, glass, Kevlar, ceramic, e.g. mullite, silicon carbide or silicon nitride, high-strength polyethylene (Dyneema), etc..

Other fillers, not having the shapes of fibers, are also possible, for example powder particles.

Mechanical vibration or oscillation suitable for the method according to the invention has preferably a frequency between 2 and 200 kHz (even more preferably ultrasonic vibration having a frequency between 10 and 100 kHz, or between 20 and 40 kHz) and a vibration energy of 0.2 to 20 W per square millimeter of active surface. The vibrating tool (sonotrode) is e.g. designed such that its contact face oscillates predominantly in the direction of the tool axis (longitudinal vibration) and with an amplitude of between 1 and 100µm, preferably around 30 to 60 µm. Such preferred vibrations are e.g. produced by ultrasonic devices as e.g. known from ultrasonic welding.

In this text, the terms "proximal" and "distal" are used to refer to directions and locations, namely "proximal" is the side of the bond from which an operator or machine applies the mechanical vibrations, whereas distal is the opposite side.

Hereinafter, principles and embodiments of the invention are illustrated in drawings. All drawings are schematical and not to scale. The drawings are used to explain the invention and embodiments thereof and are not meant to restrict the scope of the invention. In the drawings, same reference numbers refer to same or analogous elements. Terms designating the orientation like "proximal", "distal", etc. are used in the same way for all aspects and drawings. The drawings show:
- Fig. 1a and 1b: a process according to the first aspect of the invention;
- Fig. 2: a possible application illustrating a three-dimensional shape of the contour
- Figs. 3-6: alternative configurations along the contour in section;
- Figs. 7a and 7b: the process according to the further concept of the invention;
- Fig. 8: a configuration with four fastening locations; and
- Fig. 9a and 9b: a possible application of the further concept.

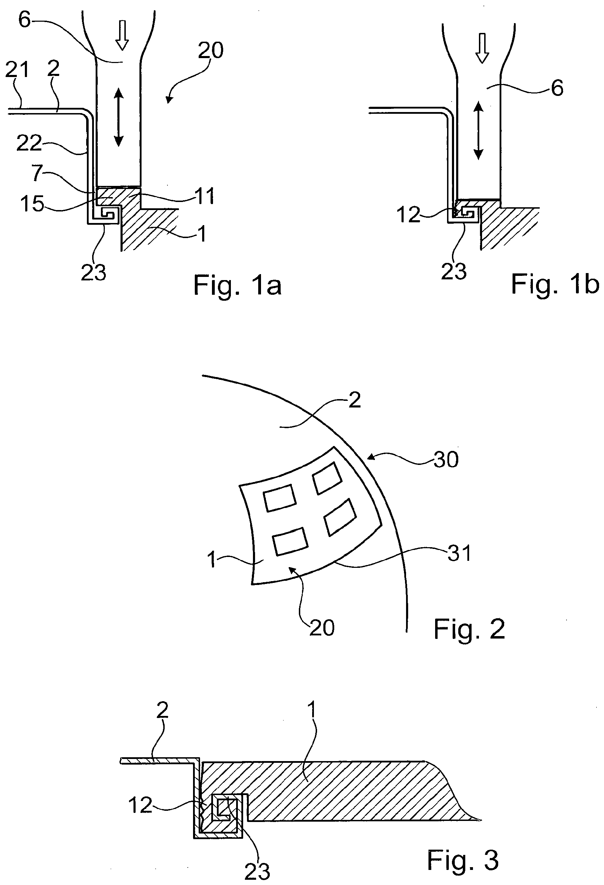

**Figures 1a and 1b** illustrate an example of the process according to its first embodiment. The figures show a cutaway section along a periphery of the opening 20 in the second object (sheet metal) 2 in which the first object 1 is fastened. The first object comprises, at least along the periphery, thermoplastic material, for example PVC.

The upper side in the figure is the exterior (and proximal) side, and the lower side is the interior/distal side. The sheet metal that forms the second object 2 in the depicted embodiment is a sheet metal portion of a complex object, the sheet metal having an outer face portion 21, a wall portion 22 and a fastening portion 23 that comprises, by having a bent-back-outwardly-section a shape that forms a coupling structure.

The first object here is a PVC carrier structure for accommodating a functional element.

The figures show that there is a gap 7 between the wall portion 22 and a first object outer peripheral portion (for example for dealing with different thermal behaviour). The flexibility of the connection brought about by a resilience of the metal sheet second object and/or resilience of the thermoplastic or other material of the first object can take up variations of the gap size over time while maintaining a tight seal.

A sonotrode 6 is used to press a peripheral portion 11 against the fastening portion 23 while mechanical vibration is coupled into it. By the absorption of the mechanical vibration energy, a flow portion of the thermoplastic material of the first object becomes flowable and flows relative to the second object 2.

Fig. 1b, showing the assembly after the flow portion has become flowable, illustrates how the mechanical vibration causes the thermoplastic material (flow portion 12) of the first object object (e.g. PVC) to melt around the fastening portion 23. A material flow may be controlled by the shape of the metal sheet, the flow portion 12 volume by a vertical movement of the sonotrode 6 and by the first object edge design (the design along the contour).

A main idea of embodiments of the first aspect is thus to use the material of the first object itself to flow into a mechanical locking shape provided by the sheet metal.

Depending on the first object design, the sonotrode can be placed on the edge of the first object (as shown in Fig. 1a) or inside the first object.

In embodiments, the first object has a peripheral flange 15 that belongs to the peripheral portion, and the sonotrode at least partially impinges on the flange 15 during the process, whereby the flange is clamped between the sonotrode and the second object. The flow portion may at least partially be of material from such a peripheral flange 15.

As mentioned, instead of using a gliding sonotrode (as shown) or rolling sonotrode that moves in a controlled fashion around the contour melting the polymer in the contact spot as it moves, it would also be possible to use a sonotrode having a shape that follows the contour around the whole periphery of the first object and is attached to a suitable vibration source.

In embodiments of the first variant (gliding or rolling sonotrode), a separate pressing tool following the sonotrode may be used to maintain the pressing force for some time when the sonotrode has moved on. Such pressing tool may for example follow the sonotrode on its path around, for example by having a fixed position relative thereto, or it may have a variable position relative thereto.

In embodiments, the process of making the flow portion flowable may comprise moving back and forth the gliding or rolling sonotrode several times.

**Figure** 2 depicts a complex article 30, for example a control station, of which the second object 2 is a part. The first object 1 in the depicted example is a touch screen input device that has plastic frame and has a 3D-shape for example for optical reasons. Generally, the second object may have a complex three-dimensional shape so that the contour 31, which is a closed contour in Fig. 2, follows an accordingly complex three-dimensional path.

**Figure** 3 shows a variant in which a proximal face of the first object after the fastening process is approximately flush with a surface defined by the second object. In this variant, the first object 1 may for example be a window, a cover or other object closing off the opening.

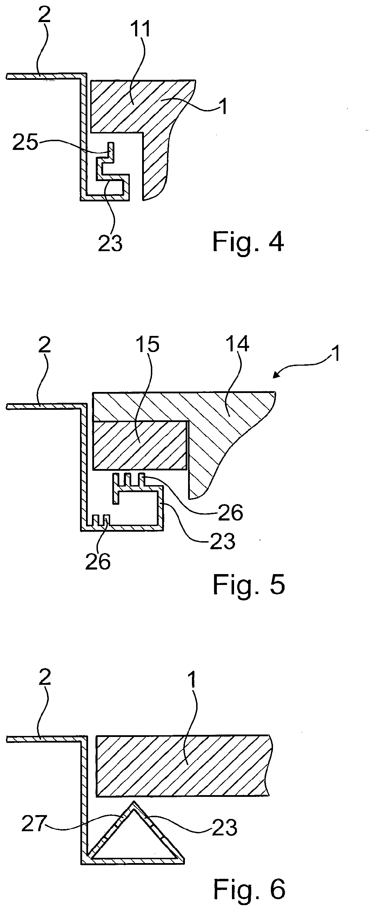

**Figure 4** shows a configuration similar to the embodiment of Fig. 1a, however, the fastening portion 23 has a different shape with an edge portion 25 projection towards proximally and thereby serving as an energy director. More distal portions of the fastening portion define the undercut.

**Figure 5** shows yet another configuration in which the fastening portion 23 has a more complex cross section with energy directing ridges 26. In contrast to the other embodiments of the first aspect, the fastening portion is not only constituted by a folded edge section of the second object. Rather, the ridges 26 project from flat sections. A second object 2 of this kind may for example be produced by casting techniques or by welding metal sheet portions together.

An other feature of the embodiment of Fig. 5 is independent of the shape of the fastening portion and may be an optional feature of any embodiment of the first aspect and also of the further concept described hereinafter. Namely, the first object does not consist of the thermoplastic material but comprises in addition to a thermoplastic portion 15 also a non-liquefiable portion 14 of a different material composition (non-liquefiable in the present text means "not liquefiable under the conditions that are sufficient for liquefying the thermoplastic material that contributes the flow portion, non-liquefiable material may comprise a metal, a ceramic, a plastic material that is not thermoplastic or a thermoplastic with a melting or glass transition temperature substantially higher than the corresponding temperature of the flow portion.

**Figure 6** shows yet another configuration in which the fastening portion 23 is folded back to be supported by itself, so that a ridge is formed that projects towards the proximal side and has energy directing characteristics. The flow portion may flow into an interior of the folded back portion through openings 27 which may for example be arranged regularly along the contour.

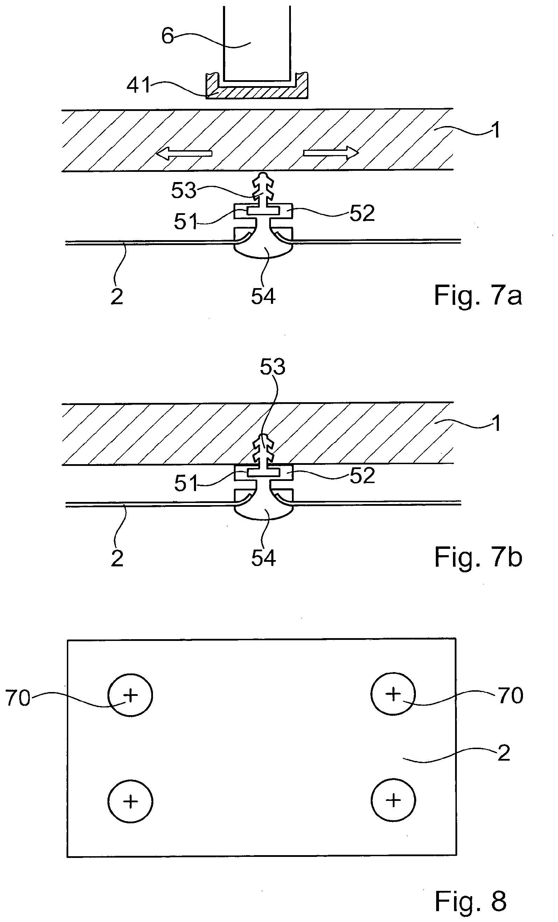

**Figure 7a** illustrates a set-up for an embodiment of the further concept. The anchor 51 has an anchoring part 54 anchored in an opening of the second object 2 and a removable click on part 52. The removable click on part 52 comprises an end piece 53 with a coupling structure that in the shown embodiment is barb-like. In the figure, the end piece 53 is shown to be metallic and embedded in plastic material of the click on part 52; however the click on part could also be one-piece, for example one-piece metallic.

For the process, the first objet 1 can be moved (double arrows) to take up any tolerance and for its position to be optimized for example from an aesthetical point of view (such as adjusted to hatch door frame regarding visual gap). Then mechanical vibration acts on the first object or possibly the second object until the flow portion becomes flowable and flows into the structure to soundly connect the end piece to the first object 1. A paint/laquer protection 41 may be applied between the sonotrode 6 and the first object 1 if the outer surface of the first object is visual in the end product (this option applying to all embodiments of all aspects of the invention if necessary or advisable).

**Figure 7b** shows the resulting situation. Removing of the panel is possible by clicking off the click on part.

This approach features the advantage that positioning of the anchors does not need to be precise, and nevertheless visual precision of the fastening is possible.

This is illustrated for example in **Figure 8****,** where a second object 2 with a plurality of fastening locations 70 is shown, each fastening location for example defined by an anchor attached to the second object. The positions of the fastening locations neither need to be very precisely defined (and hence may vary to a certain extend from article to article in a series of articles), nor need they be exactly known. A first object is placed relative to the second object and thereby may be positioned in an exact relationship with other features of the second object than the fastening location, for example features that remain visible when the first object is placed relative to the second object and thereby covers the fastening locations.

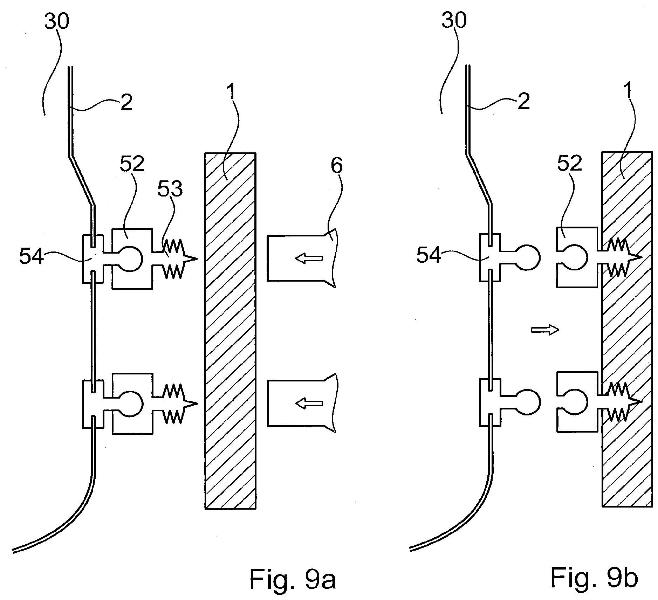

**Figures 9a** and **9b** illustrate an application, with the dimensions of the anchors and the thickness of the second object being shown exaggeratedly to better illustrate the invention.

A complex article 30 comprises the second object 2 that carries the anchors, each comprising an anchoring part 54 anchored relative to the second object 2 and a click-on part 52 clicked on the anchoring part. The first object 1 here has a plate shape. It may for example be a plastic carrier structure for a further element. For the process of fixing the first object to the second object 2, the click-on parts are clicked on the anchoring parts, and at least one sonotrode 6 is used to impinge the first object with a pressing force and mechanical energy (Fig. 9a).

After the fixing process, the positions of the click-on parts are defined by their being anchored in the first object, and the first object is thereby reversibly removable by releasing the click-on connection (Fig. 9a).

## Claims

1. A method of bonding a first object (1) to a second object (2), comprising:
- providing the second object (2) having a flat part, and an opening (20) defining a contour, the second object having a fastening portion (23) defining a coupling structure having a positive fit shape with an undercut and running around a periphery of the opening,
- providing the first object (1),
- positioning the first object (1) relative to the second object (2) in the opening (20), and providing a thermoplastic material along the contour,
- causing a relative force between the second and first objects (1, 2) and impinging the assembly of the first and second object with mechanical vibration until at least a flow portion of the thermoplastic material becomes flowable and flows into the coupling structure, and
- causing the thermoplastic material to re-solidify, wherein
- the flat part is a metal sheet portion,
- and in that the flat part along the contour is folded towards a proximal side and/or away from the opening to form at least a part of the coupling structure.

2. The method according to claim 1, wherein the first object (1) comprises the thermoplastic material.

3. The method according to claim 1 or 2, wherein the step of causing a relative force between the second and first objects (1, 2) and impinging the assembly of the first and second object with mechanical vibration comprises using a sonotrode (6) to press the first object (1) against the second object (2), wherein a coupling face of the sonotrode is in contact with a coupling face of the first object.

4. The method according to any one of the previous claims, wherein the step of causing a relative force between the second and first objects (1, 2) and impinging the assembly of the first and second object with mechanical vibration is carried out by a sonotrode (6) having a distal end shape following the contour.

5. The method according to any one of claims 1-3, wherein the step of causing a relative force between the second and first objects (1, 2) and impinging the assembly of the first and second object with mechanical vibration is carried out using a gliding sonotrode or rolling sonotrode that moves in a controlled fashion around the contour.

6. The method according to any one of claims 1-3, wherein the step of causing a relative force between the second and first objects (1, 2) and impinging the assembly of the first and second object with mechanical vibration is carried out sequentially for different locations around the contour.

7. The method according to any one of the previous claims, wherein the step of causing a relative force between the second and first objects (1, 2)and impinging the assembly of the first and second object with mechanical vibration is carried out until the coupling structure (23) is uninterruptedly penetrated by the thermoplastic material along the entire contour.

8. The method according to any one of the previous claims, wherein the second object (2) is shaped to form a pot-like feature around the opening (20), with the flat part being bent towards a distal side and forming an interior wall portion (22), with the sheet metal continuing into a fastening portion following an inner end of the wall portion, the fastening portion forming the coupling structure, and wherein in the step of positioning, the first object (1) is for example positioned with a gap (7) between a peripheral surface and the interior wall (22) portion.

9. The method according to any one of the previous claims, wherein the first object (1) has a peripheral flange (15), and wherein in the step of causing a relative force between the second and first objects (1, 2) and impinging the assembly of the first and seconds object with mechanical vibration, the peripheral flange (15) is in contact with the coupling structure.

10. The method according to any one of the previous claims, wherein the second object (2) belongs to an automobile body.

## Patentansprüche

1. Verfahren zum Verbinden eines ersten Objekts (1) mit einem zweiten Objekt (2), umfassend:
- Bereitstellen des zweiten Objekts (2), das einen flachen Teil hat, und einer Öffnung (20), die eine Kontur definiert, wobei das zweite Objekt einen Befestigungsabschnitt (23) hat, der eine Koppelstruktur definiert, die eine formschlüssige Form mit einer Hinterschneidung hat und um einen Umfang der Öffnung herum läuft,
- Bereitstellen des ersten Objekts (1),
- Positionieren des ersten Objekts (1) bezüglich des zweiten Objekts (2) in der Öffnung (20) und Bereitstellen eines thermoplastischen Materials entlang der Kontur,
- Veranlassen einer relativen Kraft zwischen dem zweiten und dem ersten Objekt (1, 2) und Beaufschlagen der Anordnung aus dem ersten und dem zweiten Objekt mit mechanischer Schwingung bis mindestens ein Fließabschnitt des thermoplastischen Materials fließfähig wird und in die Koppelstruktur fließt, und
- Veranlassen, dass das thermoplastische Material wieder erstarrt, wobei
- der flache Teil ein Blechabschnitt ist,
- und wobei der flache Teil entlang der Kontur zu einer proximalen Seite hin und/oder von der Öffnung weg gefaltet ist, um mindestens einen Teil der Koppelstruktur zu bilden.

2. Verfahren nach Anspruch 1, wobei das erste Objekt (1) das thermoplastische Material umfasst.

3. Verfahren nach Anspruch 1 oder 2, wobei der Schritt des Veranlassens einer relativen Kraft zwischen dem zweiten und dem ersten Objekt (1, 2) und des Beaufschlagens der Anordnung aus dem ersten und dem zweiten Objekt mit mechanischer Schwingung die Verwendung einer Sonotrode (6) umfasst, um das erste Objekt (1) gegen das zweite Objekt (2) zu pressen, wobei eine Koppelfläche der Sonotrode mit einer Koppelfläche des ersten Objekts in Kontakt ist.

4. Verfahren nach einem der vorhergehenden Ansprüche, wobei der Schritt des Veranlassens einer relativen Kraft zwischen dem zweiten und dem ersten Objekt (1, 2) und des Beaufschlagens der Anordnung aus dem ersten und dem zweiten Objekt mit mechanischer Schwingung von einer Sonotrode (6) mit einem distalen Ende ausgeführt wird, dessen Form der Kontur folgt.

5. Verfahren nach einem der Ansprüche 1 - 3, wobei der Schritt des Veranlassens einer relativen Kraft zwischen dem zweiten und dem ersten Objekt (1, 2) und des Beaufschlagens der Anordnung aus dem ersten und dem zweiten Objekt mit mechanischer Schwingung unter Verwendung einer Gleitsonotrode oder Rollsonotrode, die sich auf eine gesteuerte Art um die Kontur herum bewegt, ausgeführt wird.

6. Verfahren nach einem der Ansprüche 1 - 3, wobei der Schritt des Veranlassens einer relativen Kraft zwischen dem zweiten und dem ersten Objekt (1, 2) und des Beaufschlagens der Anordnung aus dem ersten und dem zweiten Objekt mit mechanischer Schwingung aufeinanderfolgend für verschiedene Stellen um die Kontur herum ausgeführt wird.

7. Verfahren nach einem der vorhergehenden Ansprüche, wobei der Schritt des Veranlassens einer relativen Kraft zwischen dem zweiten und dem ersten Objekt (1, 2) und des Beaufschlagens der Anordnung aus dem ersten und dem zweiten Objekt mit mechanischer Schwingung so lange ausgeführt wird, bis die Koppelstruktur (23) ununterbrochen entlang der gesamten Kontur von dem thermoplastischen Material durchdrungen ist.

8. Verfahren nach einem der vorhergehenden Ansprüche, wobei das zweite Objekt (2) so ausgebildet ist, dass es ein topfartiges Merkmal um die Öffnung (20) herum bildet, wobei der flache Teil zu einer distalen Seite hin gebogen ist und einen Innenwandabschnitt (22) bildet, wobei sich das Blech in einen Befestigungsabschnitt fortsetzt, der einem inneren Ende des Wandabschnitts folgt, wobei der Befestigungsabschnitt die Koppelstruktur bildet und wobei in dem Positionierungsschritt das erste Objekt (1) beispielsweise mit einem Spalt (7) zwischen einer Umfangsfläche und dem Innenwandabschnitt (22) positioniert ist.

9. Verfahren nach einem der vorhergehenden Ansprüche, wobei das erste Objekt (1) einen Umfangsflansch (15) hat und wobei der Umfangsflansch (15) bei dem Schritt des Veranlassens einer relativen Kraft zwischen dem zweiten und dem ersten Objekt (1, 2) und des Beaufschlagens der Anordnung aus dem ersten und dem zweiten Objekt mit mechanischer Schwingung mit der Koppelstruktur in Kontakt ist.

10. Verfahren nach einem der vorhergehenden Ansprüche, wobei das zweite Objekt (2) zu einem Kraftfahrzeugaufbau gehört.

## Revendications

1. Procédé pour relier un premier objet (1) à un deuxième objet (2), le procédé comprenant les étapes qui consistent à :
- prévoir le deuxième objet (2) présentant une partie plane et une ouverture (20) qui définit un contour, le deuxième objet (2) présentant une partie de fixation (23) qui définit une structure d'accouplement dotée d'une forme en correspondance géométrique présentant une contre-dépouille et s'étendant autour de la périphérie de l'ouverture,
- prévoir le premier objet (1),
- positionner le premier objet (1) par rapport au deuxième objet (2) dans l'ouverture (20) et prévoir un matériau thermoplastique le long du contour,
- appliquer une force entre le deuxième et le premier objet (1, 2) et appliquer des vibrations mécaniques sur l'ensemble constitué du premier et du deuxième objet jusqu'à ce qu'au moins une partie fluidifiée du matériau thermoplastique soit devenue fluide et s'écoule dans la structure d'accouplement,
- amener le matériau thermoplastique à se resolidifier,
- la partie plane étant une partie en forme de tôle métallique,
- la partie plane étant repliée le long du contour en direction d'un côté proximal et/ou de manière à s'éloigner de l'ouverture de manière à former au moins une partie de la structure d'accouplement.

2. Procédé selon la revendication 1, dans lequel le premier objet (1) comprend le matériau thermoplastique.

3. Procédé selon les revendications 1 ou 2, dans lequel l'étape d'application d'une force entre le deuxième et le premier objet (1, 2) et d'application de vibrations mécaniques sur l'ensemble constitué du premier et du deuxième objet recourt à l'utilisation d'une sonotrode (6) pour repousser le premier objet (1) contre le deuxième objet (2), une face d'accouplement de la sonotrode étant en contact avec une face d'accouplement du premier objet.

4. Procédé selon l'une quelconque des revendications précédentes, dans lequel l'étape d'application d'une force entre le deuxième et le premier objet (1, 2) et d'application de vibrations mécaniques sur l'ensemble constitué du premier et du deuxième objet est réalisée par une sonotrode (6) dont la forme de l'extrémité distale épouse le contour.

5. Procédé selon l'une quelconque des revendications 1 à 3, dans lequel l'étape d'application d'une force entre le deuxième et le premier objet (1, 2) et d'application de vibrations mécaniques sur l'ensemble constitué du premier et du deuxième objet est réalisée en utilisant une sonotrode coulissante ou une sonotrode roulante qui se déplace de manière contrôlée autour du contour.

6. Procédé selon l'une quelconque des revendications 1 à 3, dans lequel l'étape d'application d'une force entre le deuxième et le premier objet (1, 2) et d'application de vibrations mécaniques sur l'ensemble constitué du premier et du deuxième objet est réalisée successivement en différents emplacements autour du contour.

7. Procédé selon l'une quelconque des revendications précédentes, dans lequel l'étape d'application d'une force entre le deuxième et le premier objet (1, 2) et d'application de vibrations mécaniques sur l'ensemble constitué du premier et du deuxième objet est réalisée jusqu'à ce que la structure d'accouplement (23) soit imprégnée de manière ininterrompue par le matériau thermoplastique le long de la totalité du contour.

8. Procédé selon l'une quelconque des revendications précédentes, dans lequel le deuxième objet (2) est configuré en forme d'élément en pot entourant l'ouverture (20) et dont la partie plane est repliée vers un côté distal et forme une partie (22) formant une paroi intérieure, la tôle métallique se prolongeant dans une partie de fixation qui forme la structure d'accouplement qui suit une extrémité intérieure de la partie formant paroi, la partie de fixation formant la structure d'accouplement, le premier objet (1) étant positionné par exemple avec un interstice (7) entre une surface périphérique et la partie (22) formant une paroi intérieure lors de l'étape de positionnement.

9. Procédé selon l'une quelconque des revendications précédentes, dans lequel le premier objet (1) possède une bride périphérique (15), la bride périphérique (15) étant en contact avec la structure d'accouplement lors de l'étape d'application d'une force entre le deuxième et le premier objet (1, 2) et d'application de vibrations mécaniques sur l'ensemble constitué du premier et du deuxième objet.

10. Procédé selon l'une quelconque des revendications précédentes, dans lequel le deuxième objet (2) fait partie du corps d'une automobile.
